# EUROPEAN PATENT SPECIFICATION

(11) **EP 0 392 572 B1**
(45) Date of publication and mention of the grant of the patent: **07.09.1994**
(21) Application number: 90200411.8
(22) Date of filing: 21.02.1990
(51) Int. Cl.: G01B 7/10, B65H 7/04

(54) **Method of checking the composition of multilayer units composed of sheetlike parts and apparatus for composing, and checking the composition of, such units**
Verfahren zur Überwachung der Zusammensetzung von aus blattähnlichen Teilen zusammengesetzten Einheiten sowie Gerät zum Zusammenbau und Prüfen der zusammengebauten Einheiten
Méthode pour surveiller la composition des unités multicouches composées des parties feuilletées et appareil pour composer et surveiller la composition desdits unités

(30) Priority: 22.02.1989 NL 8900437
(43) Date of publication of application: 17.10.1990
(73) Proprietor: Hadewe B.V., NL-9201 BX Drachten (NL)
(72) Inventor: Hoekstra, Ydo Nanno, NL-8501 BR Joure (NL); Drenth, Klaas, NL-9247 DN Ureterp (NL)
(74) Representative: Smulders, Theodorus A.H.J., Ir.

(56) References cited:
- EP-A- 0 097 570
- EP-A- 0 239 337
- GB-A- 2 106 081
- US-A- 4 170 346
- ELEKTRONIK, vol. 19, no. 1, January 1970, page 12: "Die erprobte Schaltung - Induktive Abtastvorrichtung für Papier und Folien"

## Description

The invention relates to a method according to the preamble of claim 1.

Such a method is known from US-A-4 170 346. According to this method, the units to be checked are passed between plates of a capacitor. Variations of the number of sheets creates a related dielectric variation, which in turn affects the capacitance of the capacitor. The composition of the units is checked by comparing the frequency of a variable frequency oscillator of which the capacitor forms a part with a reference frequency. Different unit thicknesses will require different plate spacings, which will necessitate different oscillator frequencies for the various spacings.

According to another known method of checking the composition of multilayer units composed of sheetlike parts, these units are passed by a microswitch which is set manually at the thickness of the unit to be checked and indicates whether a unit passing along has the desired thickness.

By checking the composition of multilayer units of sheet material, it can for instance be avoided that a document clinging as a result of static electricity is added to a next unit and will thus be sent to the wrong person. The incorrect composition of a unit may also be due to the possibility that a feed station fails to supply a copy or supplies two copies of a document to be added to the unit during its composition.

One limitation of this latter method is the requisite manual pre-setting of the reference value for each composite unit that is anticipated. Since the requirements as to the accuracy of detection are more difficult to comply with according as a unit is comprised of more parts, soon a point is reached where setting the microswitch manually is too complicated to be entrusted to unskilled personnel. Furthermore, a microswitch is a detection member that switches from a "yes" signal to a "no" signal at one given value. On account of this, such a member is in fact unsuitable for mail processing systems which, using for instance the technique of optically reading marks provided on the documents, permit forming consecutive units of widely different composition, *inter alia* by selectively adding enclosures to the documents.

In addition, there are methods and apparatus known for checking single sheets passed along a checkpoint, as disclosed in for instance DE-A-3 221 379. The apparatus proposed in that publication is intended to ascertain that a single sheet - no more and no less - is fed to a paper processing apparatus, in particular a printing apparatus. To that effect electromagnetic coils are used to measure the displacement of a roller which rests on a support and is pushed up by sheetlike parts which are passed over the support and under the roller. For various reasons such apparatuses are less suitable for detecting composite units. For instance, a composite unit, in particular when comprising folded documents, may have a considerable thickness, causing the roller upon contact with the unit to jump to a level above the upper surface of the composite unit, which might give rise to incorrect or inaccurate measuring results. The same might be due to the possibly uneven arrangement of the various component documents of a unit and, also, the unit will not be of the same thickness throughout if it comprises documents having a length different from other documents, or documents folded into parts that are unequal when viewed longitudinally. When such detection apparatuses are used in a mail processing system as referred to above, the check for completeness comprises determining whether each of the documents to be added to the unit is actually supplied or not, or, alternatively, it is required that such a detection apparatus be present at each document feed station. It is moreover required that during transport of the unit it is regularly checked that no document to go with the unit has remained behind.

It is an object of the present invention to provide a method for checking units composed of sheet material which is at the same time sufficiently accurate to check multilayer units and at the same time flexible in that it allows checking of units of different predetermined compositions passed by in succession, without any readjustment of the apparatus being necessary.

This object is achieved in accordance with the invention by applying the characterizing measures of claim 1 in a method according to the preamble.

Through these measures it can be ensured that in each case the measurement is made in the area where the thickness of the unit can be checked without risk of disturbances as referred to above, and at the same time by making measurements during an interval of time and calculating a measuring result from them accuracy is considerably improved. The accuracy of the measurement thus attained makes it possible to use that measurement for the automatic setting of the reference values for the thicknesses of multilayer units. Thus a method is obtained which is eminently suitable for application to mail processing systems as described above in that units comprised of a plurality of documents can be reliably checked as to composition using a single checkpoint, and a reference value can automatically be coupled to each of successive varying compositions, which reference values subsequent units of similar composition can be checked against. When the process of checking is started and when the composition of the unit to be passed along the checkpoint is changed, the reference value can easily and rapidly be adjusted.

During the measuring interval a profile of the upper surface of the composite unit can be determined, which in turn is used for obtaining the measuring result through calculation, for instance integration. In accordance with a further embodiment of the invention, however, it is preferred that the measuring result is obtained by recording a plurality of measuring signals during the interval referred to, which are used to determine through averaging or summing the value which is compared with the reference value.

To ensure that irrelevant minor variations do not result in a rejection, it is preferred in accordance with a further embodiment of the invention, that upon comparison with the reference value, the measured value is accepted if it falls within a tolerance range of the reference value, whose limits relatively to the reference value are set at a value considerably smaller than the anticipated value of the thinnest of the component parts of the units to be checked, preferably about half the value of that thinnest part.

If, in accordance with a further embodiment of the invention, the space ahead of the first unit passing the checkpoint and the spaces between two units passing the checkpoint in spaced succession, are treated as units having zero thickness and a corresponding reference value, and the moment of deviation from the reference value and its range of tolerance is used as a detection of the leading and/or trailing edge of a unit, the measurement of the thickness is further used advantageously to arrive at a way of determining the interval during which measurements are to be made when a composite unit is passed along the checkpoint without separate means being required for determining the leading or trailing edge of the composite unit. It goes without saying a range of tolerance is assigned to the zero reference value, too, and the zero value can always be re-adjusted in the way discussed hereinbefore.

As already noted, a composite unit, depending on the component documents, may have a thickness that varies along the length of the unit. In order to ensure that in those cases, too, a representative measuring area is selected, it is preferred, and in accordance with a further embodiment of the invention, that the thickness of the first unit of a given composition that passes the checkpoint is sensed throughout the length of the unit, after which it is determined when the interval referred to - during which the value varying with the thickness of the passing unit is determined - is to commence relatively to one of the edges of that unit.

If in a mail processing system one or more additional sheets and/or enclosures are to be added selectively to some composite units, but not to others, a control system will be present which generates a stream of information governing the addition or non-addition.of documents. In accordance with a further embodiment of the invention this stream of information can be used advantageously - and definitely so if, furthermore, the respective composite units supplied vary in thickness, being composed, for instance, of a varying number of sheets which each may have a variant thickness and may or may not be folded - if the reference value which the measured value of a unit is to be compared with is determined on the basis of information on the composition of the unit to be measured, which information is received from a control system governing the composition of the unit, a different reference value being used.for each anticipated composition of the unit. In particular, if composite units of widely different and varying composition are to be checked, it might happen that one or more compositions seldom pass the checkpoint or do not pass it at all for a long time, as a result of which it might turn out that the reference value is no longer sufficiently up to date.owing to changes in the conditions. This circumstance can be provided for in accordance with a further embodiment of the invention by arithmetically determining the reference value of a given composite unit from the reference values of a plurality of units of a different composition. In addition, this method of deduction may be used with particular advantage in yet another way, namely by determining, in accordance with a further embodiment of the invention, the influence of each of the parts of a composite unit on the reference value of that unit by arithmetical calculation based on the reference values stored, so that if a measured value upon comparison with the reference value is rejected, an indication can be given as to what part of the composite unit caused the rejection. Not only can it thus be checked whether the unit measured has the desired composition, but also, if it has not, an indication can be provided as to in what document feed station something went wrong in that too many or too few documents were supplied, so that when any errors are observed, appropriate measures can be taken more promptly.

The measurements made to obtain the measuring result referred to can be carried out by sensing the passing unit, the interval during which the measurement is carried out commencing after a delay following the moment when the leading edge of that unit is sensed.

Carrying out the measurements by sensing offers the advantage of a wide measuring range in comparison with non-contact measuring methods. The fact that the interval during which the measurement is carried out commences after a delay following the moment when the leading edge of that unit is sensed, removes the drawback associated with sensing, viz. that the thickness measured when the leading edge of a unit to be measured passes will jump to a higher value beyond the value corresponding to the actual thickness of that unit in the measured area.

The invention can also be embodied in an apparatus for carrying out the method according to claim 1 provided with the features according to claim 10.

Owing to these features only a single measuring unit is required to arrive at a reliable check of the composition of each passing unit, regardless of the number of feed stations.

For the measuring unit to be able to sense accurately over a certain period and across a relatively wide range, it is preferred, and in accordance with a further embodiment of the invention, that the measuring unit comprise a sensor which is adapted to scan the conveyor track or the composite unit transported in it and to that effect is movably connected to a clip fixedly attached to the conveyor track, any displacement of the sensor relatively to the clip causing at least one magnet to move relatively to an electromagnetic sensor. The electro-magnetic sensor may move together with the sensor or, alternatively, be connected to the fixed clip. To obtain a relatively simple but efficiently operating measuring unit, it is preferred, and in accordance with a further embodiment of the invention, that the sensor comprises a roller which is adapted to scan the conveyor track or a unit transported in it, that the movable connection with the clip consists of two parallel leaf springs, and that two magnets are attached to the movable sensor arranged on opposite sides of the electromagnetic sensor, which is fixedly attached to the fixed clip.

With reference to the embodiments shown by way of example in the accompanying drawings, the checking method and checking apparatus according to the invention will now be further discussed and explained. In the drawings
Fig. 1 schematically shows a side elevational view of an apparatus for composing, and checking the composition of, multilayer units composed of sheetlike parts according to the prior art;
Fig. 2 schematically shows a side elevational view of an apparatus for composing, and checking the composition of, multilayer units composed of sheetlike parts according to the invention;
Fig. 3 is a cross-sectional view of the measuring unit used in Fig. 2; and
Fig. 4 shows an example of a composite unit.

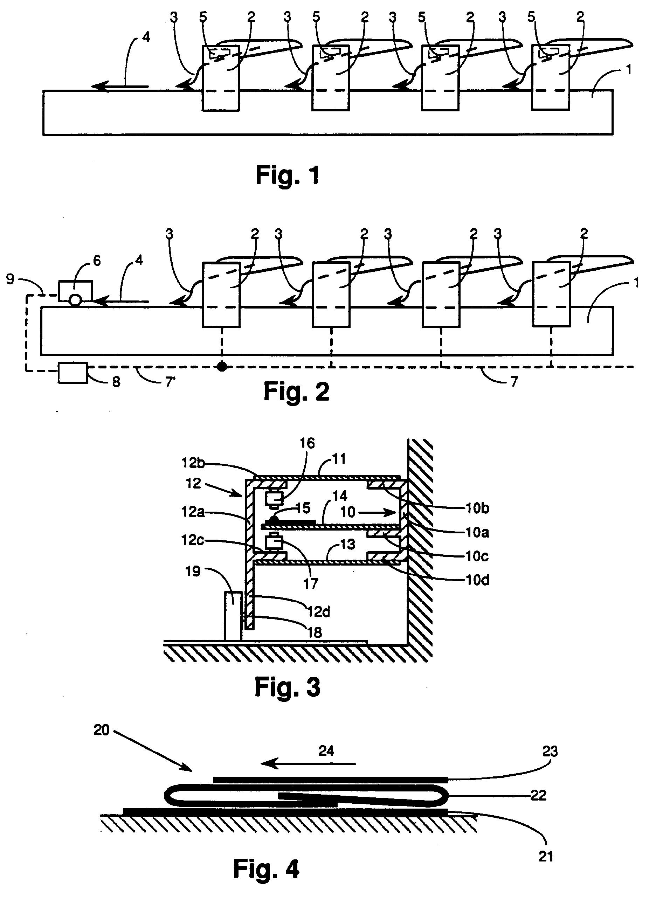

The apparatus shown in Fig. 1 comprises a conveyor track 1 having four feed stations 2, which are each adapted to deposit a document 3 onto the upper surface of the conveyor track, so as to form units of various compositions. It is noted that the number of four feed stations is randomly chosen and may, of course, be any other desired number. Further, the conveyor track 1 may at its supply end, i.e. the right-hand end shown in the drawing, connect with one or more other document supplying apparatuses, such as printers, collecting and/or folding apparatuses, and such apparatuses may also be arranged between or downstream of the feed stations.

Arrow 4 indicates a unit as finally composed and ready to be carried off. To ensure that the unit to be carried off really is of the desired composition, it should constantly be checked during the composition whether at a given point one document, and not more than one, is actually supplied. To that effect each feed station 2 requires a measuring unit 5 to be present, which, after being set for a given document, is capable of establishing whether none, one, or more of those documents pass. Even then, for that matter, no complete certainty is obtained, because a document having passed the measuring unit 5 may not have ended up with the desired unit, for instance due to clinging as a result of static electricity, but may have come loose only when a subsequent unit passed and was only then carried along.

Fig. 2 shows an apparatus operating in accordance with the invention. This apparatus, too, comprises a conveyor track 1 having feed stations 2 for documents 3 so as to form a composite unit indicated again by arrow 4. In the present apparatus, however, only a single measuring unit 6 is provided at the end of conveyor track 1 instead of separate measuring units for each feed station, adjusted to the document to be sensed. The measuring unit 6 scans the completed composite unit to check whether the unit has the desired composition. Of course, it is also possible to arrange an additional measuring unit between the feed stations, for instance in cases where prompt discovery or location of errors is required.

Fig. 3 shows a cross-section of one embodiment of a measuring unit that can be used in the apparatus according to Fig. 2. Secured to a part fixedly arranged relatively to the conveyor track 1 is a clip 10 comprising a basic part 10a, a spring support 10b, a plate support 10c and a spring support 10d. Attached to the spring support 10b is one end of a leaf spring 11, the other end being fixedly attached to a spring support 12b of a sensor member 12 further comprising a basic part 12a, a spring support 12c and a sensor support 12d coextensive with the basic part 12a. Attached to the spring support 12c is one end of a leaf spring 13, the other end being affixed to the spring support 10d of the clip 10. Attached to the plate support 10c of the clip is one end of a plate 14, there being arranged in the vicinity of the other end an electromagnetic sensor 15 adapted to pass signals via communicating means (not shown) to a calculating unit (not shown either). Above the sensor 15, a magnet 16 is arranged attached to the spring support 12b, and under sensor 15, a magnet 17 is arranged attached to the spring support 12c. Connected to the lower end of the sensor support 12d, finally, is a shaft 18 carrying a rotary sensor roller 19. Initially this roller rests upon the upper surface of the conveyor track 1. However, as soon as a composite unit resting on the upper surface of the transport track 1 reaches the sensor roller 19, the roller will be pushed up and commence to roll along the upper surface of the unit, thus scanning the surface. To permit the roller 19 to be pushed up, the leaf springs 11 and 13 will bend, causing the sensor member 12 to be displaced relatively to the clip 10, the magnets 16 and 17 being accordingly displaced relatively to the sensor 15, which leads to a modification of the signal transmitted to the calculating unit.

It will be clear that every vertical displacement of the sensor roller 19 leads to a modification of the signal generated by the sensor 15. Such displacement, however, will not only occur at the beginning and the end of a composite unit, but also while the upper surface of that composite unit is being scanned, that is, if there is anything to cause displacement. Fig. 4 shows a possible composition of such a unit 20. It comprises an unfolded bottom sheet 21, on top of that a sheet 22 whose front and back are folded back so that the free edge portions overlap, and a topmost unfolded sheet 23 of shorter length than sheet 21. It goes without saying this is only one of a great number of possible compositions of a unit, but it is a good example of the kind of varying thickness of a unit that the sensor roller 19 may encounter. Assuming that the unit 20 moves in the direction of arrow 24, the roller 19 will sustain a first upward displacement upon contacting the leading edge of the bottommost sheet 21. Then the leading folding edge of sheet 22 will be contacted, which causes a further upward displacement of roller 19. It should be noted here that a document at the location of a folding edge tends to have a thickness greater than twice the thickness of the unfolded document. Thus it may be that the sensor roller 19, after passing the folding edge, moves slightly downward again. The roller will again sustain an upward displacement upon contacting the leading edge of sheet 23. Once the roller 19 has passed the leading edge of sheet 23, it has reached the deviation representative for the unit 20, namely a deviation equal to the thickness of the (unfolded) sheet 21 plus twice the thickness of the (folded) sheet 22 and once the thickness of the (unfolded) sheet 23. However, the roller 19 travels even further up upon reaching the area of overlap where the front and back ends of the sheet 22 are folded back, and after traversing that area, returns to the representative deviation referred to above, which it may deviate from again when approaching the trailing fold in the sheet 22. Finally the roller 19 disengages from the unit 20 and rolls along the upper surface of the conveyor track 1 again.

It will be clear from the above description that checking the composition of a unit using such a measuring unit requires more than sensing alone, the more so if in accordance with the object of the present invention an automatic adjustment of the checking apparatus is also contemplated.

If the units are of simpler composition than shown in Fig. 4, being comprised, for instance, of unfolded, equally long documents, the variation in the vertical deviation of the sensor roller 19 will be small. Even then, however, the deviation of the roller may be greater than the deviation representative for the unit, for instance when the roller is pushed up and jumps, as it were, upon abutting against the leading edge of the unit, in particular if it has a relatively large thickness. Therefore, for the deviation to be considered sufficiently reliable for a check as to composition, the measurement of that deviation will have to be quite accurate.

For the required accuracy to be attained, in accordance with the invention, measuring is carried out during a certain interval, the beginning or the end of which is related to one of the edges of the passing unit. It goes without saying that the interval is set in such a way that periods in which deviations of the representative thickness may occur - as discussed above -fall outside the interval. From the measurement during the interval referred to the representative thickness of the unit is determined through calculation, which determination is highly accurate owing to this particular measuring method: so accurate, in fact, that it can be used as reference value for the unit. In accordance with the invention this feature is made use of in that the measured and calculated value is stored as a reference value the first time a unit of a given composition is sensed, an automatic adjustment of the checking appparatus thus being obtained. If units of varying composition are to be checked, each time a unit of a given composition is sensed for the first time, the value then determined is stored as reference value, which is used to compare a subsequently passing unit of that same composition. In this way, using only one checking apparatus, an apparatus is provided which is capable of checking units of widely different compositions while the adjustment of the apparatus is automatic.

The automatic setting of the reference value can further be used for the automatic adjustment of the reference value to changing conditions, such as humidity and temperature. This can be effected by adding a value which has been accepted after comparison with the reference value to a store of such values and then taking from that store, say, the five values added last and calculating from them a new adjusted reference value, which is then used to compare with it the next passing unit of the composition that corresponds to that reference value.

As already noted, the interval in which the measurement is carried out must be adjusted to a representative thickness of the passing composite unit which is being sensed. In the discussion of the composite unit shown in Fig. 4 two areas were indicated having a representative thickness for the unit in question. In order to arrive in such cases at an optimum assessment of the interval in which the measurement is to take place, the entire profile of the unit can be sensed the first time a unit of a given composition passes, whereafter, depending on the profile, it is determined what part of the unit is most favourable for the measurement to be carried out. To accurately determine the beginning or the end of the interval, use is made of the fact that the sensor roller rests on the conveyor track before and after each unit. By employing that position of the roller as zero reference, the leading or trailing edge of the composite unit can accurately be detected and the beginning or the end of the interval referred to can be related to that detection. It goes without saying that the zero reference, too, can be adjusted to changing conditions in the way discussed above in respect of the reference value of the composite unit.

It is noted that particularly in the case of units varying as to composition, the calculating unit will have to know with what reference value the unit passing through the measuring unit is to be compared. To that effect the calculating unit must be fed with data on the required composition of the unit in question. These data can be drawn from a stream of information coming from a control system 7 schematically shown in Fig. 2, which system governs the feed stations and any further optional feed stations and other apparatuses, and is connected to a calculating and control unit 8 through a circuit 7′, which unit controls the measuring unit 6 via a circuit 9.

It goes without saying that many modifications and variations will readily occur within the definition of the invention as defined in Claims 1, 10. The composite units are usually meant to be sent by mail, to which end they can be processed in folding and/or inserting apparatuses. Although the foregoing is concerned with checking the unit at the end of a mail assembly line, it goes without saying it is also possible to check just before or after the insertion into envelopes has been carried out. Figs 2 and 3 show a measuring unit with one sensor roller. Each measuring unit may comprise a plurality of rollers, for instance two rollers arranged next to each other to scan the unit along different lines, the measuring data of the two rollers being processed in the calculating unit in the most suitable way, for instance for the processing of cross-folded material.

## Claims

1. A method for checking the composition of units comprising a plurality of layers of sheet material, comprising the steps of passing the units (24) in spaced succession by a checkpoint (6), determining the beginning of a predetermined measurement interval for each unit in relation to the passage of a transverse edge of that unit (24) passing by, determining a value for each unit (24) according to the thickness of that unit by calculation from a measuring result obtained during the respective measurement interval, comparing said thickness value with a reference value according to a desired thickness of said unit, and accepting or rejecting said unit depending on the results of the comparison, **characterized** in that the units (24) passed by said checkpoint (6) comprise units of mutually different required compositions corresponding to mutually different data on the required compositions, the data on the required composition of each unit (24) are passed from a control system (7) governing the composition of each unit (24) to a calculating and control unit (8) controlling the checkpoint (6), the thickness value of a unit of a required composition is determined and stored as a reference value for units of that required composition the first time a unit (24) of that composition is passed by the checkpoint (6), and the thickness value of a next unit of that required composition passed by the checkpoint is determined and compared with said reference value for units of that required composition, wherein the measuring result is obtained by mechanically sensing the thickness of said unit (24), and said interval is determined such that said measuring result is obtained from a section of the respective unit located at a selected distance from said transverse edge, where the measured thickness is substantially uniform and representative of the composition of that unit.

2. A method according to claim 1, characterized in that the measuring result is obtained by recording, during the time interval referred to, a plurality of measuring signals from which, through averaging or summing, the value is determined which is compared with the reference value.

3. A method according to claim 1 or 2, characterized in that on comparison with the reference value, the calculated value is accepted if it is within a tolerance range relative to the reference value, the limits of which range are determined relatively to the reference value by a value considerably smaller than a value according to the thickness of the thinnest of the component parts (21, 22, 23) of the units (24) to be checked, preferably about half the value according to the thickness of that thinnest portion.

4. A method according to one of the preceding claims, characterized in that the space ahead of the first unit passing the checkpoint and the spaces between two units passing the checkpoint in spaced succession are treated as units having zero thickness and a corresponding reference value, the moment of deviation from this reference value and its tolerance range being used as a detection of the leading edge of a unit.

5. A method according to one of the preceding claims, characterized in that the thickness of the first unit (24) of a required composition passing the checkpoint is sensed along its entire length, after which it is determined when, with respect to the passage of a transverse edge of a unit of that composition, said time interval in which said value according to the thickness of that unit is determined, commences.

6. A method according to one of the preceding claims, characterized by using information with respect to the required composition of a unit (24) being measured, which information is received from a control system (8) governing the composition of the unit, to determine with which reference value the value according to the thickness of that unit is to be compared with, a different reference value being used for each required composition.

7. A method according to claim 6, characterized by calculating the reference value for a unit of a required composition by calculation from the reference values for a number of units of different required composition.

8. A method according to claim 7, characterized in that the influence of each of the parts of a unit on the reference value of that unit is determined arithmetically from the reference values stored.

9. A method according to one of the preceding claims characterized in that the time interval during which the measurement is carried out commences after a delay following the passage of the leading edge of that unit.

10. Apparatus for composing multilayer units composed of sheetlike parts and for checking the composed units by carrying out a method according to one of the preceding claims, comprising a conveyor track (1), a plurality of document feeder stations (2) arranged in succession along the conveyor track (1), a control system (7) for controlling the feeder stations (2), and a single measuring unit (6) arranged downstream of the feeder stations, for determining a value according to the thickness of a unit (24) passing by along the conveyor track (1), the measuring unit comprising a mechanical thickness sensor (19) adapted to determine the thickness of a unit passing by and a calculating and control unit (8) for carrying out the method as claimed in any of the preceding claims, the control system (7) and the calculating and control unit (8) being connected for feeding data on the required composition of a unit to be checked from the control system (7) to the calculating and control unit (8).

11. Apparatus according to claim 10, characterized in that the measuring unit (6) comprises a mechanical sensor (19) adapted to scan the conveyor track (1) or a composite unit (24) transported along said track (1), and movably connected to a clip (10) which is fixedly attached to the conveyor track (1), displacement of the mechanical sensor (19) relatively to the clip (10) resulting in displacement of at least one magnet (16, 17) relative to an electromagnetic sensor (15).

12. Apparatus according to claim 11, characterized in that the mechanical sensor comprises a roller (19) adapted to scan the conveyor track (1) or a composite unit (24) transported along said track (1), the movable connection with the clip comprises two parallel leaf springs (11, 13), and two magnets (16 and 17) are connected to the roller (19), said magnets (16 and 17) being arranged on opposite sides of the electromagnetic sensor (15), which is fixedly attached to the fixed clip (10).

## Patentansprüche

1. Verfahren zur Prüfung der Zusammensetzung von Einheiten, die aus einer Vielzahl von Schichten von Blattmaterialien bestehen, bei dem die Einheiten (24) in räumlicher Aufeinanderfolge einen Kontrollpunkt (6) passieren, bei dem der Beginn eines vorbestimmten Meßintervalls für jede Einheit in Bezug zu einer transversalen Kante dieser passierenden Einheit (24) bestimmt wird, bei dem ein Wert für jede Einheit (24) bezogen auf die Dicke dieser Einheit durch Berechnung vom erhaltenen Meßergebnis während des entsprechenden Meßintervalls bestimmt wird, bei dem besagter Wert für die Dicke mit einem Referenzwert bezogen auf die zuerwartende Dicke dieser Einheit verglichen und die Einheit abhängig vom Ergebnis des Vergleichs akzeptiert oder verworfen wird,
**dadurch gekennzeichnet**,
daß die den Kontrollpunkt (6) passierenden Einheiten (24) aus Einheiten unterschiedlicher gewünschter Zusammensetzung bestehen, die wiederum mit den sich voneinander unterscheidenden Daten dieser Einheiten korrespondieren, wobei diese Daten über die gewünschte Zusammensetzung einer jeden Einheit (24) von einem Steuerungssystem, welches die Zusammensetzung jeder Einheit (24) verwaltet, zu einer Rechnungs- und Steuerungseinheit (8), die den Kontrollpunkt (6) steuert, weitergeleitet werden, daß der Dickenwert einer Einheit gewünschter Zusammensetzung bestimmt und als Referenzwert für Einheiten dieser gewünschten Zusammensetzung gespeichert wird, daß der Kontrollpunkt (6) zu Beginn von einer Einheit (24) dieser Zusammensetzung passiert wird, und der Dickenwert einer nächsten den Kontrollpunkt passierenden Einheit dieser gewünschten Zusammensetzung bestimmt und mit dem Referenzwert für Einheiten dieser gewünschten Zusammensetzung verglichen wird, wobei man das Meßresultat durch mechanische Abtastung der Dicke der Einheit (24) erhält, und daß das Intervall so bestimmt wird, daß man das Meßergebnis aus einem Bereich der entsprechenden Einheit erhält, der sich in einem ausgewählten Abstand von der transversalen Kante befindet, wo die gemessene Dicke im wesentlichen gleichmäßig und repräsentativ für die Zusammensetzung dieser Einheit ist.

2. Verfahren nach Anspruch 1, dadurch gekennzeichnet, daß das Meßergebnis aus den Aufzeichnungen während des entsprechenden Zeitintervalls erhalten wird, indem aus der Vielzahl dieser Meßsignale durch Mittelwertbildung oder Aufsummierung der mit dem Referenzwert zu vergleichende Wert bestimmt wird.

3. Verfahren nach Anspruch 1 oder 2, dadurch gekennzeichnet, daß der berechnete Wert bei Vergleich mit dem Referenzwert akzeptiert wird, wenn er innerhalb eines Toleranzbereiches relativ zu dem Referenzwert liegt, wobei die Grenzen des Toleranzbereiches relativ zum Referenzwert durch einen Wert bestimmt sind, der beträchtlich kleiner als der Dickenwert der dünnsten Komponente der Bestandteile (21, 22, 23) der zu prüfenden Einheit (24) sind, vorzugsweise etwa der halbe Wert der Dicke der dünnsten Komponente.

4. Verfahren nach einem der vorhergehenden Ansprüche, dadurch gekennzeichnet, daß der Raum vor der ersten, den Prüfpunkt passierenden Einheit und der Raum zwischen zwei den Prüfpunkt in räumlicher Aufeinanderfolge passierenden Einheiten als Einheiten mit der Dicke Null und einem entsprechenden Referenzwert betrachtet wird und der Zeitpunkt der Abweichung von diesem Referenzwert und seinem Toleranzbereich zum Nachweis der vorderen Kante der Einheit benutzt wird.

5. Verfahren nach einem der vorhergehenden Ansprüche, dadurch gekennzeichnet, daß die Dicke der ersten Einheit (24) der gewünschten Zusammensetzung, die den Kontrollpunkt passiert, entlang seiner gesamten Länge abgetastet wird und danach bestimmt wird, wann bezüglich der transversalen Kante der Einheit dieser Zusammensetzung das Zeitintervall beginnt, in welchem der der Dicke dieser Einheit zugeordnte Wert bestimmt wird.

6. Verfahren nach einem der vorhergehenden Ansprüche, dadurch gekennzeichnet, daß die Information bezüglich der Zusammensetzung einer ausgemessenen Einheit verwendet wird, indem die Information von einem Steuerungssystem (8) empfangen wird, welches die Zusammensetzung der Einheit regelt, um zu bestimmen, mit welchem Referenzwert der Dickenwert dieser Einheit zu vergleichen ist, und daß für jede gewünschte Zusammensetzung ein anderer Referenzwert verwendet wird.

7. Verfahren nach Anspruch 6, dadurch gekennzeichnet, daß der Referenzwert für eine Einheit gewünschter Zusammensetzung aus den Referenzwerten von mehreren Einheiten unterschiedlicher gewünschter Zusammensetzung berechnet wird.

8. Verfahren nach Anspruch 7, dadurch gekennzeichnet, daß der Einfluß eines jeden Teils einer Einheit auf den Referenzwert dieser Einheit arythmetisch aus den gespeicherten Referenzwerten bestimmt wird.

9. Verfahren nach einem der vorhergehenden Ansprüche, dadurch gekennzeichnet, daß das Zeitintervall, währenddessen die Messung durchgeführt wird, verzögert nach dem Passieren der vorderen Kante dieser Einheit beginnt.

10. Vorrichtung zur Zusammensetzung von aus mehreren Schichten bestehenden Einheiten, die aus blattähnlichen Teilen bestehen, und zur Prüfung der zusammengesetzten Einheiten durch Ausführung einer Methode, gemäß einem der vorhergehenden Ansprüche, bestehend aus einer Transportlinie (1), einer Vielzahl von Zuführungsstationen (2) für Dokumente, die nacheinander entlang der Transportlinie (1) angeordnet sind, einem Steuerungssystem (7) für die Steuerung der Zuführungsstationen (2) und einer Meßeinheit (6), die hinter den Zuführungsstationen zur Bestimmung der Dicke der entlang der Transportlinie (1) passierenden Einheiten (24) angeordnet ist, wobei die Meßeinheit einen mechanischen Dickensensor (19) enthält, der zur Bestimmung der Dicke einer passierenden Einheit verwendet wird, und eine Rechnungs- und Steuereinheit (8) zur Durchführung der in den vorhergehenden Ansprüchen beanspruchten Methode, wobei das Steuerungssystem (7) und die Rechnungs- und Steuerungseinheit (8) miteinander verbunden sind, um die Daten der zu prüfenden Einheit vom Steuerungssystem (7) zu der Rechnungs- und Steuerungseinheit (8) zu übertragen.

11. Vorrichtung gemäß Anspruch 10, dadurch gekennzeichnet, daß die Meßeinheit (6) einen mechanischen Sensor (19) enthält, der dazu verwendet wird, die Transportlinie (1) oder eine entlang dieser Linie transportierte zusammengesetzte Einheit (24) abzutasten, und die beweglich verbunden ist mit einer Halterung (10), die wiederum fest verbunden ist mit der Transportlinie (1), und daß die Verschiebung des mechanischen Sensors (19) relativ zu der Halterung (10) schließlich zu einer Verschiebung eines Magneten (16, 17) relativ zu einem elektromagnetischen Sensor (15) führt.

12. Vorrichtung nach Anspruch 11, dadurch gekennzeichnet, daß der mechanische Sensor eine Rolle (19) enthält, die dazu verwendet wird, die Transportlinie (1) oder eine auf dieser Linie (1) transportierte zusammengesetzte Einheit (24) abzutasten, wobei die bewegliche Verbindung mit der Halterung aus zwei parallelen Blattfedern (11, 13) besteht, und daß zwei Magnete (16 und 17) mit der Rolle (19) verbunden sind, wobei die Magnete (16, 17) an entgegengesetzten Seiten des elektromagnetischen Sensors (15) angeordnet sind, der wiederum starr mit der befestigten Halterung (10) verbunden ist.

## Revendications

1. Procédé pour vérifier la composition d'unités comprenant une pluralité de couches de matière en feuille, comprenant les étapes consistant à faire passer les unités (24) successivement espacées par un point de contrôle (6), à déterminer le début d'un intervalle de mesure prédéterminé pour chaque unité en relation au passage d'un bord transversal de cette unité (24), à déterminer une valeur pour chaque unité (24) selon l'épaisseur de cette unité par calcul à partir d'un résultat de mesure obtenu durant l'intervalle de mesure respectif, à comparer ladite valeur d'épaisseur avec une valeur de référence selon une épaisseur souhaitée de ladite unité, et à accepter ou rejeter ladite unité en fonction des résultats de la comparaison,
caractérisé en ce que les unités (24), passées par ledit point de contrôle (6), comprennent des unités de compositions requises mutuellement différentes, correspondant à des données mutuellement différentes sur les compositions requises, les données de la composition requise de chaque unité (24) sont passées d'un système de commande (7), gouvernant la composition de chaque unité (24), vers une unité de calcul et de commande (8) commandant le point de contrôle (6), la valeur d'épaisseur d'une unité d'une composition requise est déterminée et stockée comme valeur de référence pour des unités de cette composition requise la première fois qu'une unité (24) de cette composition passe par le point de contrôle (6), et la valeur d'épaisseur d'une prochaine unité de cette composition requise, passée par le point de contrôle, est déterminée et comparée avec ladite valeur de référence pour des unités de cette composition requise, le résultat de mesure étant obtenu par détection, de façon mécanique, de l'épaisseur de ladite unité (24), et ledit intervalle étant déterminé de telle sorte que ledit résultat de mesure soit obtenu à partir d'une section de l'unité respective située à une distance choisie dudit bord transversal, où l'épaisseur mesurée est sensiblement uniforme et représentative de la composition de cette unité.

2. Procédé selon la revendication 1,
caractérisé en ce que le résultat de mesure est obtenu en enregistrant, pendant l'intervalle de temps concerné, une pluralité de signaux de mesure à partir desquels, par moyenne ou addition, la valeur est déterminée qui est comparée avec la valeur de référence.

3. Procédé selon la revendication 1 ou 2,
caractérisé en ce que, lors de la comparaison avec la valeur de référence, la valeur calculée est acceptée si elle est dans une plage de tolérance par rapport à la valeur de référence, dont les limites de la plage sont déterminées par rapport à la valeur de référence par une valeur considérablement plus petite qu'une valeur selon l'épaisseur la plus mince des parties constituantes (21, 22, 23) des unités (24) à vérifier, de préférence environ la moitié de la valeur selon l'épaisseur de cette portion la plus mince.

4. Procédé selon l'une des revendications précédentes,
caractérisé en ce que l'espace en avant de la première unité passant le point de contrôle et les espaces entre deux unités passant le point de contrôle successivement espacées sont traités comme unités ayant une épaisseur nulle et une valeur de référence correspondante, le moment de déviation à partir de cette valeur de référence et sa plage de tolérance étant utilisés comme détection du bord avant d'une unité.

5. Procédé selon l'une des revendications précédentes,
caractérisé en ce que l'épaisseur de la première unité (24) d'une composition requise passant le point de contrôle est détectée sur sa longueur totale, après quoi il est déterminé quand, par rapport au passage d'un bord transversal d'une unité de cette composition, ledit intervalle de temps, dans lequel ladite valeur selon l'épaisseur de cette unité est déterminée, commence.

6. Procédé selon l'une des revendications précédentes,
caractérisé en utilisant l'information relative à la composition requise d'une unité (24) mesurée, laquelle information est reçue d'un système de commande (8) gouvernant la composition de l'unité, pour déterminer avec laquelle valeur de référence la valeur selon l'épaisseur de cette unité doit être comparée, une valeur de référence différente étant utilisée pour chaque composition requise.

7. Procédé selon la revendication 6,
caractérisé en calculant la valeur de référence pour une unité d'une composition requise par calcul à partir des valeurs de référence pour un nombre d'unités de composition différente requise.

8. Procédé selon la revendication 7,
caractérisé en ce que l'influence de chacune des parties d'une unité sur la valeur de référence de cette unité est déterminée arithmétiquement à partir des valeurs de référence stockées.

9. Procédé selon l'une des revendications précédentes,
caractérisé en ce que l'intervalle de temps, durant lequel la mesure est mise en oeuvre, commence après un délai suivant le passage du bord avant de cette unité.

10. Appareil pour composer des unités multicouches constituées de pièces en forme de feuille et pour vérifier les unités composées en mettant en oeuvre le procédé selon l'une des revendications précédentes, comprenant une voie de roulement de transporteur (1), une pluralité de postes d'alimentation en document (2) agencés successivement le long de la voie du transporteur (1), un système de commande (7) pour commander les postes d'alimentation (2), et une unité de mesure unique (6) agencée en aval des postes d'alimentation, pour déterminer une valeur selon l'épaisseur d'une unité (24) passant le long de la voie du transporteur (1), l'unité de mesure comprenant un détecteur d'épaisseur mécanique (19) adapté pour déterminer l'épaisseur d'une unité, et une unité de calcul et de commande (8) pour mettre en oeuvre le procédé comme revendiqué dans une quelconque des revendications précédentes, le système de commande (7) et l'unité de calcul et de commande (8) étant reliés pour fournir des données sur la composition requise d'une unité à vérifier, à partir du système de commande (7) vers l'unité de calcul et de commande (8).

11. Appareil selon la revendication 10,
caractérisé en ce que l'unité de mesure (6) comprend un détecteur mécanique (19) agencé pour balayer la voie du transporteur (1) ou une unité composite (24) transportée le long de ladite voie (1), et relié, de façon mobile, à une attache (10) qui est fixement liée à la voie du transporteur (1), le déplacement du détecteur mécanique (19) par rapport à l'attache (10) entraînant le déplacement d'au moins un aimant (16, 17) par rapport à un détecteur électromagnétique (15).

12. Appareil selon la revendication 11,
caractérisé en ce que le détecteur mécanique comprend un rouleau (19) agencé pour balayer la voie du transporteur (1) ou une unité composite (24) transportée le long de ladite voie (1), la liaison mobile avec l'attache comprend deux ressorts à lame parallèles (11, 13), et deux aimants (16 et 17) sont reliés au rouleau (19), lesdits aimants (16 et 17) étant agencés sur des côtés opposés du détecteur électromagnétique (15), qui est lié, de façon fixe, à l'attache fixe (10).
